# DEMANDE DE BREVET EUROPEEN

(11) **EP 1 429 276 A1**
(43) Date de publication de la demande: **16.06.2004**
(21) Numéro de dépôt: 02027990.7
(22) Date de dépôt: 14.12.2002
(51) Int. Cl.: G06K 7/00, G06K 19/077, H04N 5/00

(54) **Interface détachable pour module de décryption et de contrôle d'accès pour un décodeur de télévision numérique**

(71) Demandeur: NagraCard SA, 1033 Cheseaux-sur-Lausanne (CH)
(72) Inventeur: Osen, Karl, 1282 Dardagny (CH)
(74) Mandataire: Wenger, Joel-Théophile

(57) **Abrégé**

La présente invention propose une interface (9) détachable pour module de décryption et de contrôle d'accès (13) pour un décodeur de télévision numérique, ledit décodeur acceptant un module de décryption détachable original (8) connecté sur un support (5) situé derrière le panneau frontal (2, 3) du décodeur en occupant un espace limité par le connecteur du support (6) et par le panneau frontal (3). L'interface (9) permet d'installer un nouveau module (13) de longueur supérieure à celle du module original (8) sans empêcher la fermeture du panneau frontal (2, 3). Elle comprend une carte de circuit imprimé (12) sensiblement rectangulaire munie de deux connecteurs (10, 11), le premier connecteur (10) disposé le long d'un petit côté de la carte de circuit imprimé (12) sert à la connexion au décodeur sur le support (5) du module original (8). Le second connecteur (11) servant à la connexion au nouveau module (13) est disposé sur le petit côté opposé de la carte de circuit imprimé (12). Il est situé en regard de la face interne du panneau frontal (3) du décodeur, les contacts dudit connecteur (11) étant dirigés vers l'intérieur du décodeur. Le nouveau module (13) est posé sur la carte de circuit imprimé (12) de ladite interface (9) en passant par-dessus le premier connecteur (10).

## Description

La présente invention concerne le domaine des décodeurs de télévision numérique auxquels est connecté un module de décryption et de contrôle d'accès. Plus particulièrement, l'objet de l'invention consiste en une interface détachable permettant de connecter à un décodeur un nouveau module chargé de la décryption et du contrôle d'accès à la place du module de décryption prévu à l'origine.

Les décodeurs connus utilisent pour la sécurité de l'accès aux données vidéo deux modules, l'un dit module de décryption et l'autre dit module de contrôle d'accès. Un module de décryption est un dispositif sous forme d'un boîtier détachable muni d'un connecteur à insérer dans un décodeur. Un tel module est fourni par un opérateur de télévision à péage, et se charge de décrypter les données vidéo en provenance d'un câble ou d'un satellite en fonction de clés ou mots de contrôle reçus de la part du module de contrôle d'accès.

Le module de contrôle d'accès se présente sous la forme d'une carte à puce réputée inviolable et dans laquelle les droits d'un utilisateur sont stockés. Les messages d'administration du système (message de contrôle ECM et messages de droits EMM) sont dirigés vers ce module qui dispose des clés de transmission nécessaires à la décryption de ces messages.

Les mots de contrôles (CW) contenus dans les messages de contrôle sont retournés au module de décryption si les droits sont présents dans ledit module de contrôle d'accès.

Il existe deux types principaux de module de décryption à savoir:
- Le module C-CAM (C - Conditional Access Module) comprenant un circuit de décryptage monté dans un boîtier se connectant au décodeur à travers un orifice disposé sur le panneau avant du décodeur.
- Le module DVB-Cl (Digital Video Broadcasting - Common Interface) compatible au format PCMCIA (Personal Computer Memory Card International Association) comprenant un circuit électronique chargé du décryptage et un lecteur de carte à puce pour recevoir le module de contrôle d'accès.. Ces deux éléments sont intégrés ensemble dans un boîtier plat normalisé pour former un module compact tel que décrit dans le brevet US6443361. Dans ce cas la carte à puce est insérée dans le module qui est lui-même inséré dans une embouchure adéquate sur le panneau avant du décodeur.

Ces deux types de modules ne peuvent pas être remplacés l'un par l'autre dans un décodeur donné. En effet, un décodeur dont le connecteur est compatible avec le premier type de module n'acceptera pas le module du second type et vice-versa. Les deux types de modules se distinguent essentiellement par leurs dimensions (hauteur et longueur) et par l'attribution des contacts de leur connecteur aux divers signaux.

Dans le cas d'un décodeur acceptant un module du type C-CAM, il est souhaitable de pouvoir connecter un module d'un modèle plus récent, c'est-à-dire du type DVB-CI. Ce changement de module devient nécessaire, par exemple, lorsqu'un utilisateur désire décrypter des programmes fournis par un autre opérateur sans devoir changer le décodeur dans son ensemble.

Le but de la présente invention est de proposer un moyen simple, efficace et peu coûteux permettant de remplacer un module du type C-CAM par un module du type DVB-CI dans un décodeur conçu pour n'accepter que des modules de contrôle d'accès du type C-CAM. Bien entendu, ce remplacement s'effectue sans remplacer ni modifier des composants internes du décodeur.

Ce but est atteint par une interface détachable pour module de décryption et de contrôle d'accès pour un décodeur de télévision numérique, ledit décodeur acceptant un module de décryption détachable original connecté sur un support situé derrière le panneau frontal du décodeur en occupant un espace, situé entre le connecteur du support et la face interne du panneau frontal, de longueur sensiblement égale à la longueur du module, comprenant une carte de circuit imprimé sensiblement rectangulaire munie de deux connecteurs, le premier connecteur disposé le long d'un petit côté de la carte de circuit imprimé servant à la connexion au décodeur sur le support du module de décryption original, le second connecteur servant à la connexion à un nouveau module de décryption et de contrôle d'accès de longueur supérieure à la longueur du module original, caractérisée en ce que le second connecteur est disposé sur le petit côté opposé de la carte de circuit imprimé et situé en regard de la face interne du panneau frontal, les contacts dudit second connecteur étant dirigés vers l'intérieur du décodeur, l'agencement des deux connecteurs dudit circuit imprimé étant effectué de façon à ce que le nouveau module posé sur la carte de circuit imprimé de ladite interface passe par-dessus le premier connecteur.

Cette interface ou adaptateur permet de transférer les signaux provenant du décodeur via le connecteur C-CAM vers les contacts adéquats du connecteur supportant le nouveau module du type DVB-CI.

Un problème particulier est apparu dans des décodeurs d-box 1 de Nokia pour lequel un espace limité existe entre le connecteur destiné à recevoir le module C-CAM et le panneau frontal du décodeur. En plus du problème de compatibilité des connexions, on est confronté à une distance L restreinte si l'on souhaite pouvoir fermer ce panneau.

Un des objets de l'invention est de proposer une interface permettant l'utilisation d'un nouveau module de longueur supérieure à L tout en laissant la possibilité de fermer le panneau frontal du décodeur.

Les dimensions de l'interface sont proches de celles du module original C-CAM. L'insertion du nouveau module DVB-Cl devient possible grâce à la disposition du second connecteur avec les contacts orientés vers l'intérieur du décodeur et l'emplacement du connecteur sur la carte de circuit imprimé le long du côté opposé au connecteur du support. Le nouveau module occupe ainsi un espace libre au-dessus du support et limité dans le sens de la longueur seulement par le second connecteur. La partie frontale du module qui est dirigée vers l'intérieur du décodeur ne touche aucun obstacle au-delà du connecteur du support.

La carte à puce est alors insérée dans le nouveau module, le lecteur séparé dont la fente se trouve sur le panneau avant du décodeur est ainsi désactivé.

L'invention sera mieux comprise grâce à la description détaillée qui va suivre et qui se réfère aux dessins annexés qui sont donnés à titre d'exemple nullement limitatif, dans lesquels:
- La figure 1 illustre une coupe schématique de la partie frontale d'un décodeur muni d'un module C-CAM.
- La figure 2 illustre l'adaptateur seul inséré à la place du module C-CAM
- La figure 3 illustre l'ensemble adaptateur-module DVB-Cl inséré dans le connecteur C-CAM du décodeur.
- La figure 4 représente une vue de dessus de l'ensemble adaptateur-module DVB-Cl.

Les figures se rapportent à un exemple de décodeur du type d-box 1 de Nokia qui utilise un module de contrôle d'accès du type C-CAM. La carte à puce est insérée dans une fente adéquate située sur le panneau frontal à quelque distance du module. Le module C-CAM communique avec la carte à puce permettant le décryptage des données vidéo selon les spécificités de l'abonnement mémorisées sur la carte.

Il est entendu qu'une interface selon l'invention peut aussi s'appliquer à d'autres modèles de décodeurs où un changement de module de contrôle d'accès devient nécessaire.

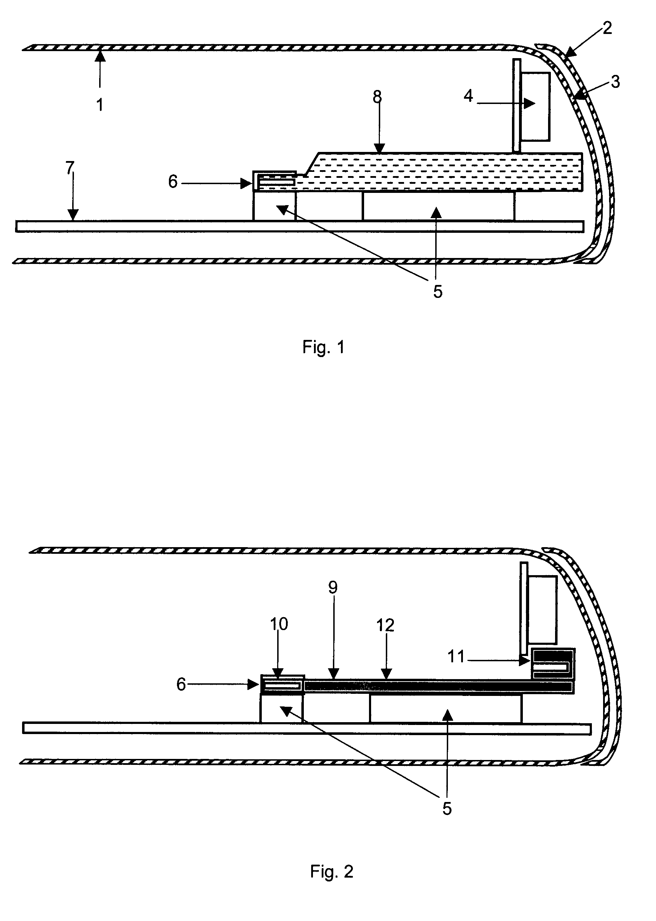

La figure 1 montre une coupe partielle du boîtier (1) d'un décodeur d-box 1 au niveau de l'emplacement du module de contrôle d'accès C-CAM (8). Ce dernier est inséré sur un support (5) fixé sur la carte mère (7) et situé sous l'affichage (4). Ce support (5) est équipé d'un connecteur (6). Le panneau frontal (2, 3) comporte deux couvercles rabattables permettant l'accès au support (5) pour la mise en place ou l'extraction du module (8).

La figure 2 illustre l'interface selon l'invention appelé adaptateur CIDA (Common Interface to D-box 1 Adapter) (9) connecté à la place du module (8) C-CAM. Cet adaptateur (9) comprend une carte de circuit imprimé (12) rectangulaire de longueur et de largeur proches de celles d'un module (8) C-CAM et un connecteur (10, 11) disposé le long du bord de chaque petit côté du circuit (12).

Le premier connecteur (10) sert à relier l'adaptateur (9) au décodeur via le connecteur (6) réservé au module C-CAM. Ce premier connecteur (10) correspond au même modèle que celui monté sur un module (8) C-CAM, c'est-à-dire au modèle PC-CARD type C comportant deux rangées parallèles de 34 contacts femelles (socket) disposés selon un pas de 1.27 mm.

Le second connecteur (11) est disposé sur le côté opposé de la carte de circuit imprimé (12) situé en regard du panneau frontal (3) du décodeur muni des deux couvercles. Il est monté le long du bord de la carte (12) de manière à ce que ses contacts soient dirigés vers l'intérieur du décodeur lorsque l'adaptateur (9) est mis en place sur son support (5). Le modèle et le type de ce second connecteur correspondent à ceux du premier mais avec des contacts mâles (header).

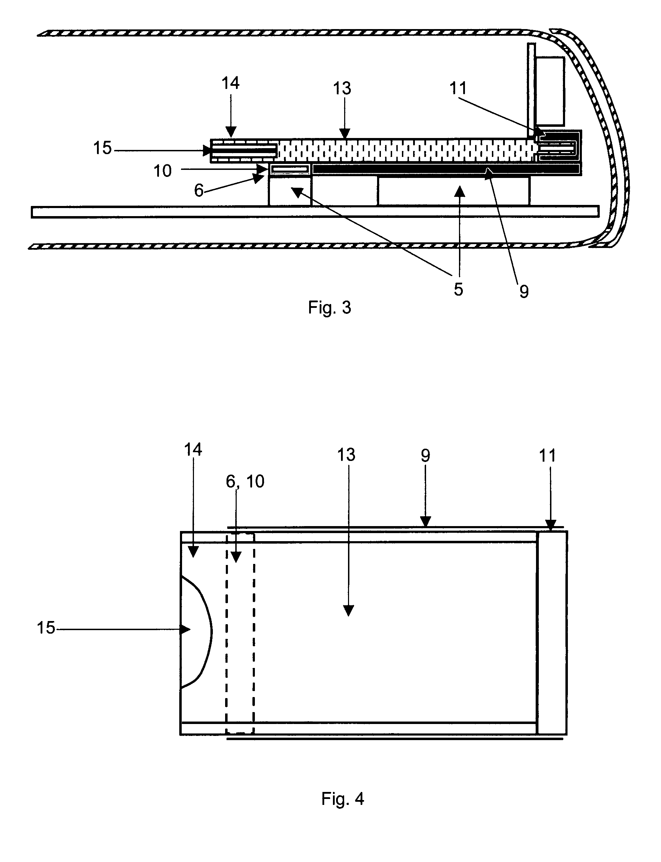

Ce connecteur (11) sert à connecter le module DVB-Cl (13) comme illustré sur la figure 3. Le module (13) est ainsi posé sur la carte de circuit imprimé (12) avec sa partie frontale (14), où est insérée la carte à puce (15), dirigée vers l'intérieur du boîtier du décodeur. La longueur du module (13) DVB-Cl étant plus grande que celle du module (8) C-CAM, la partie frontale (14) du module (13) DVB-Cl dépasse du support (5) en passant au-dessus de la connexion du module au décodeur. Ce dépassement est permis car aucun obstacle interne au décodeur tel qu'un composant ou une paroi n'empêche une insertion correcte du module.

Le circuit imprimé sur la carte (12) se charge d'aiguiller les différents signaux provenant du décodeur via le premier connecteur (10) vers les broches adéquates du module (13) DVB-CI monté sur l'adaptateur CIDA (9). En effet, le brochage d'un module (8) C-CAM n'est pas compatible avec celui d'un module DVB-Cl qui est conforme à la norme PCMCIA.

La figure 4 montre une vue de dessus de l'ensemble adaptateur CIDA-module DVB-CI. La partie frontale du module (14) dirigée vers l'intérieur du décodeur comporte une embouchure dans laquelle est insérée la carte à puce (15). La largeur de l'adaptateur correspond à celle du module (13) et l'insertion de l'ensemble s'effectue de la même manière que l'insertion d'un module (8) C-CAM.

Cet adaptateur (9) ne nécessite donc aucune modification du décodeur lorsqu'un module (8) C-CAM est remplacé par un module (13) DVB-CI. Les dimensions de l'adaptateur (9) CIDA sont déterminées par la taille du module (8) C-CAM.

De plus les coûts de fabrication d'un tel adaptateur restent très faibles vu sa simplicité (deux connecteurs et un circuit imprimé sans composants complexes).

Un inconvénient mineur de l'adaptateur (9) CIDA est que la carte à puce (15) ne peut pas être retirée directement sans extraire l'ensemble entier adaptateur-module de son support situé derrière le panneau frontal (3) du décodeur.

Néanmoins une variante de l'invention permet de contourner cet inconvénient:

Le module (13) DVB-Cl peut être monté sur l'adaptateur (9) CIDA sans carte à puce, celle-ci étant remplacée par un dispositif de connexion qui relie les huit contacts de la carte à puce (15) de l'intérieur du module (13) DVB-CI au circuit imprimé (12) de l'adaptateur (9) CIDA. Ce dernier transfère les signaux de ces contacts vers le lecteur de carte du panneau frontal en passant par des broches adéquates du connecteur du décodeur.

Le dispositif de connexion peut aussi se présenter sous la forme d'un module similaire à une carte à puce comportant les mêmes contacts qu'une carte à puce. Un câble relie ce module au lecteur de carte du panneau frontal.

Cette variante peut cependant nuire à la sécurité de la liaison de la carte à puce au module de contrôle. En effet, le dispositif de connexion peut permettre à un tiers de dévier les signaux destinés à la carte à puce vers un émulateur. Par contre, dans la première variante où la carte à puce est insérée dans le lecteur intégré au module DVB-CI, les signaux de la carte restent inaccessibles de l'extérieur ce qui garantit une sécurité accrue.

## Revendications

1. Interface détachable pour module de décryption et de contrôle d'accès pour un décodeur de télévision numérique, ledit décodeur acceptant un module de décryption détachable original (8) connecté sur un support (5) situé derrière le panneau frontal (2, 3) du décodeur en occupant un espace, situé entre le connecteur (6) du support et la face interne du panneau frontal (3), de longueur sensiblement égale à la longueur du module (8), comprenant une carte de circuit imprimé (12) sensiblement rectangulaire munie de deux connecteurs (10, 11), le premier connecteur (10) disposé le long d'un petit côté de la carte de circuit imprimé (12) servant à la connexion au décodeur sur le support (5) du module de décryption original (8), le second connecteur (11) servant à la connexion à un nouveau module de décryption et de contrôle d'accès (13) de longueur supérieure à la longueur du module original (8), **caractérisée en ce que** le second connecteur (11) est disposé sur le petit côté opposé de la carte de circuit imprimé (12) et situé en regard de la face interne du panneau frontal (3), les contacts dudit second connecteur (11) étant dirigés vers l'intérieur du décodeur, l'agencement des deux connecteurs (10, 11) dudit circuit imprimé (12) étant effectué de façon à ce que le nouveau module (13) posé sur la carte de circuit imprimé (12) de ladite interface (9) passe par-dessus le premier connecteur (10).

2. Interface selon la revendication 1, **caractérisée en ce que** le premier connecteur (10) est agencé pour se connecter au connecteur du support (6) de type C-CAM, le second connecteur (11) étant agencé pour établir une connexion avec un module (13) du type DVB-CI muni d'un lecteur de carte à puce intégré.

3. Interface selon les revendications 1 et 2, **caractérisée en ce que** sa longueur et sa largeur sont adaptées à celles du module original (8) C-CAM.

4. Décodeur de télévision numérique comprenant un support (5) situé derrière le panneau frontal (3) destiné à la connexion d'un module de décryption (8) du type C-CAM et un premier lecteur de carte à puce comportant une embouchure séparée sur le panneau frontal, **caractérisé en ce que** le support (5) comporte une interface (9) détachable selon les revendications 1 à 3, sur laquelle est connecté un module de décryption et de contrôle d'accès (13) du type DVB-CI, ledit module (13) comprenant un second lecteur de carte à puce intégré dont l'embouchure est dirigée vers l'intérieur du décodeur.

5. Décodeur selon la revendication 4 **caractérisé en ce que** l'ensemble formé par le module (13) DVB-CI et l'interface (9) est inséré à l'emplacement initialement réservé au module (8) C-CAM, la carte à puce (15) étant insérée dans le second lecteur intégré du module (13) DCB-Cl, le premier lecteur de carte du décodeur étant désactivé.

6. Décodeur selon la revendication 4, **caractérisé en ce que** le second lecteur de carte à puce du module (13) DVB-Cl comporte un dispositif de connexion qui relie les contacts de premier lecteur de carte à puce au circuit imprimé (12) de l'interface détachable (9).

7. Décodeur selon la revendication 4, **caractérisé en ce que** le second lecteur de carte à puce du module DVB-Cl comporte un dispositif de connexion qui relie les contacts de premier lecteur de carte à puce à un module comportant les mêmes contacts qu'une carte à puce, ce module étant inséré dans le second lecteur de carte à puce.

8. Décodeur selon les revendications 4 à 7, **caractérisé en ce qu'**il est du type Nokia d-box 1 comportant un support acceptant des modules de décryption du type C-CAM.
